# EUROPEAN PATENT APPLICATION

(11) **EP 2 549 767 A2**
(43) Date of publication of application: **23.01.2013**
(21) Application number: 12161466.3
(22) Date of filing: 27.03.2012
(51) Int. Cl.: H04N 13/04, H04N 13/00

(54) **Display apparatus with 3D structure and control method thereof**

(30) Priority: 19.07.2011 KR 20110071237
(71) Applicant: Samsung Electronics Co., Ltd., Suwon-si, Gyeonggi-do, 443-742 (KR)
(72) Inventor: Kwon, Oh-yun, Seoul (KR)
(74) Representative: Waddington, Richard

(57) **Abstract**

A control method of a display apparatus is provided. The control method includes: obtaining at least one piece of identification information of a user and identification information of three-dimensional (3D) glasses; obtaining a disparity setting mapped to the identification information; and displaying a left eye image and a right eye image by determining a degree of disparity based on the disparity setting.

## Description

### BACKGROUND

### 1. Field

Apparatuses and methods consistent with the exemplary embodiments relate to a display apparatus and a control method thereof, and more particularly, to a display apparatus having a three-dimensional (3D) image display structure to improve the perception of a 3D effect felt by a user for an object within a 3D image, and a control method thereof.

### 2. Description of the Related Art

A display apparatus processes an image signal input from an external image source and displays an image on a display panel, which may be implemented by a liquid crystal display or the like, based on the processed image signal. The display apparatus scans the display panel with scan lines including image information for display of the image and constructs one image frame by arranging the scan lines on the display panel in a sequence.

An image displayed by the display apparatus may be classified into a two-dimensional (2D) image and a three-dimensional (3D) image depending on its property. Viewing angles by both eyes of a user are different, which allows the user to perceive a 3D image of an object. According to this principle, the 3D image is displayed on the display apparatus with the image divided into a left eye image and a right eye image and the display apparatus correspondingly provides 3D glasses to perform selective light transmission/shield for both eyes of the user. The 3D glasses may be implemented as shutter glasses to selectively transmit light depending on whether or not a voltage is applied, or polarizing glasses to transmit light in a predetermined polarization direction.

### SUMMARY

Accordingly, one or more exemplary embodiments provide a display apparatus having a 3D image display structure to improve perception of a 3D effect felt by a user for an object within a 3D image, and a control method thereof.

According to the present invention there is provided an apparatus and method as set forth in the appended claims. Other features of the invention will be apparent from the dependent claims, and the description which follows.

The foregoing and/or other aspects may be achieved by providing a control method of a display apparatus, including: obtaining at least one piece of identification information of a user and 3D glasses; obtaining a disparity setting mapped to the identification information; and displaying a left eye image and a right eye image by determining a degree of disparity based on the disparity setting.

The identification information may be at least one of user input information input to a user interface (UI) and information received from the 3D glasses.

The 3D glasses may include one of shutter glasses and polarizing glasses.

The identification information may be a parameter contained in a message transmitted in a wireless manner from the 3D glasses to the display apparatus.

The disparity setting may be information preset based on visibility corresponding to the identification information.

The identification information may include at least one of ID information of the 3D glasses and a Media Access Control (MAC) address.

The disparity setting may be differently set based on at least one of farsightedness, nearsightedness, convergence of both eyes and a difference in eyesight between both eyes of a user.

The disparity setting may be set such that a degree of disparity in the inner direction of a screen of the display apparatus for visibility of a farsighted user is larger than that of an ordinary user or a nearsighted user.

The disparity setting may be set such that a degree of disparity in the outer direction of a screen of the display apparatus for visibility of a farsighted user is smaller than that of an ordinary user or a nearsighted user.

The disparity setting may be set such that a degree of disparity in the inner direction of a screen of the display apparatus for visibility of a nearsighted user is smaller than that of an ordinary user or a farsighted user.

The disparity setting may be set such that a degree of disparity in the outer direction of a screen of the display apparatus for visibility of a nearsighted user is larger than that of an ordinary user or a farsighted user.

The disparity setting may be set such that degrees of disparity of the left eye image and the right eye image are asymmetrically set for visibility of a user having different left and right eyesight.

The foregoing and/or other aspects may be achieved by providing a display apparatus including: a display unit and an image processing unit which obtains at least one piece of identification information of a user and 3D glasses, determines a degree of disparity based on a disparity setting mapped to the obtained identification information, and displays a left eye image and a right eye image on the display unit based on the determined degree of disparity.

The image processing unit may obtain, as the identification information, at least one of user input information input to a user interface (UI) and information received from the 3D glasses.

The 3D glasses may include one of shutter glasses and polarizing glasses.

The identification information may be a parameter contained in a message transmitted in a wireless manner from the 3D glasses to the display apparatus.

The disparity setting may be information preset based on visibility corresponding to the identification information.

The identification information may include at least one of ID information of the 3D glasses and an MAC address.

The disparity setting may be differently set based on at least one of farsightedness, nearsightedness, convergence of both eyes of the user and a difference in eyesight between both eyes of a user.

The disparity setting may be set such that a degree of disparity in the inner direction of a screen of the display apparatus for visibility of a farsighted user is larger than that of an ordinary user or a nearsighted user.

The disparity setting may be set such that a degree of disparity in the outer direction of a screen of the display apparatus for visibility of a farsighted user is smaller than that of an ordinary user or a nearsighted user.

The disparity setting may be set such that a degree of disparity in the inner direction of a screen of the display apparatus for visibility of a nearsighted user is smaller than that of an ordinary user or a farsighted user.

The disparity setting may be set such that a degree of disparity in the outer direction of a screen of the display apparatus for visibility of a nearsighted user is larger than that of an ordinary user or a farsighted user.

The disparity setting may be set such that degrees of disparity of the left eye image and the right eye image are asymmetrically set for visibility of a user having different left and right eyesight.

The foregoing and/or other aspects may be achieved by providing a control method of a display apparatus, including: setting and storing disparity values between a left eye image and a right eye image of a 3D image displayed on the display apparatus in correspondence with first shutter glasses of at least one shutter glasses operating in correspondence with the 3D image; and if it is determined that the first shutter glasses communicate with the display apparatus when the 3D image is displayed, displaying the 3D image based on the disparity values stored in correspondence with the first shutter glasses.

The displaying the 3D image based on the disparity values stored in correspondence with the first shutter glasses may include: receiving an identifier (ID) of the first shutter glasses from the first shutter glasses; and searching and selecting a disparity value corresponding to the received identifier from the stored disparity values.

The identifier may include an MAC address of the first shutter glasses.

The searching and selecting a disparity value corresponding to the received identifier from the stored disparity values may include: if a disparity value corresponding to the received identifier is not obtained from the stored disparity values when the stored disparity values are searched, displaying one of a set image having a disparity value which can be adjusted by a user, and an error message.

The searching for, and selecting of, a disparity value corresponding to the received identifier from the stored disparity values may include: if a disparity value corresponding to the received identifier is not obtained from the stored disparity values when the stored disparity values are searched, transmitting the identifier to a server, and receiving and selecting the disparity value corresponding to the identifier from the server.

The setting and storing of disparity values between a left eye image and a right eye image of a 3D image may include: receiving an identifier of the first shutter glasses from the first shutter glasses; displaying a set image having the disparity value which can be adjusted by a user; and storing the disparity value adjusted through the set image in correspondence with the identifier of the first shutter glasses.

The displaying the 3D image based on the disparity values stored in correspondence with the first shutter glasses may include: if it is determined that the first shutter glasses and at least one second shutter glasses different from the first shutter glasses communicate with the display apparatus when the 3D image is displayed, selecting a first disparity value corresponding to the first shutter glasses and at least one second disparity value corresponding to the at least one second shutter glasses; calculating a third disparity value based on the selected first disparity value and the selected at least one second disparity value; and displaying the 3D image based on the calculated third disparity value.

The third disparity value may be the mean value of the first disparity and the at least one second disparity value.

The foregoing and/or other aspects may be achieved by providing a display apparatus including: a display unit; a communication unit which communicates with at least one shutter glasses in correspondence with a 3D image displayed on the display unit; and an image processing unit which stores disparity values between a left eye image and a right eye image of the 3D image set in correspondence with first shutter glasses of the at least one shutter glasses, and, if it is determined that the first shutter glasses communicate with the communication unit when the 3D image is displayed, displaying the 3D image based on the disparity values stored in correspondence with the first shutter glasses.

Upon receiving an identifier (ID) of the first shutter glasses through the communication unit, the image processing unit may search for and select a disparity value corresponding to the received identifier from the stored disparity values.

The identifier may include an MAC address of the first shutter glasses.

If no disparity value corresponding to the received identifier is obtained from the stored disparity values when the stored disparity values are searched, the image processing unit may display one of a set image having the disparity value which can be adjusted by a user, and an error message.

If no disparity value corresponding to the received identifier from the stored disparity values is searched, the image processing unit may transmit the identifier to a server, and receives and selects the disparity value corresponding to the identifier from the server.

Upon receiving an identifier of the first shutter glasses from the first shutter glasses, the image processing unit may display a set image having the disparity value which can be adjusted by a user on the display unit, and store the disparity value adjusted through the set image in correspondence with the identifier of the first shutter glasses.

If it is determined that the first shutter glasses and at least one second shutter glasses different from the first shutter glasses communicate with the display apparatus when the 3D image is displayed, the image processing unit may select a first disparity value corresponding to the first shutter glasses and at least one second disparity value corresponding to the at least one second shutter glasses, calculate a third disparity value based on the selected first disparity value and the selected at least one second disparity value, and display the 3D image based on the calculated third disparity value.

The third disparity value may be the mean value of the first disparity and the at least one second disparity value.

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 is a view showing an example of a display system according to a first exemplary embodiment;

FIG. 2 is a block diagram of the display system of FIG. 1;

FIG. 3 is a view showing an example of a disparity value between a left eye image and a right eye image displayed on the display apparatus of FIG. 1;

FIG. 4 is a flow chart showing a process of setting and storing a disparity value in the display apparatus of FIG. 1;

FIGS. 5 and 6 are flow charts showing a process of displaying a 3D image based on a disparity value corresponding to shutter glasses in the display apparatus of FIG. 1;

FIG. 7 is a block diagram of a display system according to a second exemplary embodiment; and

FIG. 8 is a view showing an example of an image for which a disparity value is set depending on user's visibility in a display system according to a third exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout. In the following exemplary embodiments, explanation of components having no direct relation to the spirit of the exemplary embodiments is omitted. However, it is appreciated that it is not meant to exclude such omitted components from a display system 1 to which the spirit of the exemplary embodiments is applied.

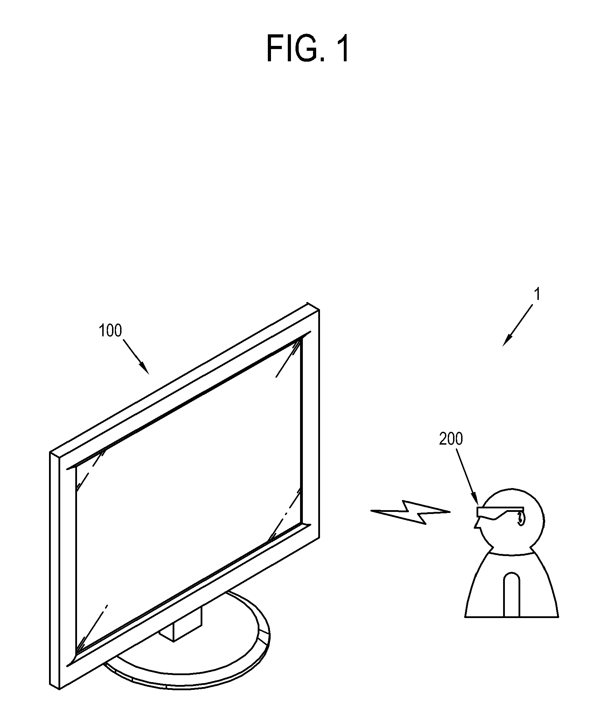

FIG. 1 is a view showing an example of a display system 1 according to a first exemplary embodiment.

Referring to FIG. 1, the display system 1 according to this exemplary embodiment includes a display apparatus 100 which processes an image signal input from an external source and displays an image based on the processed image signal, and 3D glasses 200 operable to selectively transmit/shield light in response to an image being displayed as a 3D image on the display apparatus 100.

The display apparatus 100 receives an image signal from an external image source (not shown) which is not particularly limited. The display apparatus 100 may be supplied with image signals from various types of image sources including, but not limited to, a computer (not shown) which generates and locally provides an image signal with a central processing unit (CPU) (not shown) and a graphic card (not shown); a server (not shown) which provides an image signal to a network; a broadcasting apparatus (not shown) of a broadcasting station which broadcasts a broadcasting signal via the air or a cable, or other image sources known in the art. According to this exemplary embodiment, the display apparatus 100 may be implemented with a television (TV) but the spirit and scope of the exemplary embodiments are not limited to such disclosed implementation of the display apparatus 100.

The display apparatus 100 receives a 2D image signal corresponding to a 2D image or a 3D image signal corresponding to a 3D image from the image source and processes the image signal for displaying images. In this case, the 3D image includes a left eye image corresponding to a left eye of a user and a right eye image corresponding to a right eye of the user, unlike the 2D image. Upon receiving the 3D image signal, the display apparatus 100 displays frames of the left eye image and the right eye image alternately based on the received 3D image signal.

When the 3D image is displayed on the display apparatus 100, the 3D glasses 200 selectively opens/closes a field of view for the left and right eyes of the user depending on which is being currently displayed, the left eye image frame or the right eye image frame. In this exemplary embodiment, the 3D glasses 200 are implemented with shutter glasses 200. However, the spirit and scope of the exemplary embodiments are not limited to such disclosed implementation of the 3D glasses 200 but the 3D glasses 200 may be implemented with polarizing glasses as long as they can communicate with the display apparatus 100.

The shutter glasses 200 open the field of view for the left eye of the user and close the field of view for the right eye of the user if the left eye image is displayed on the display apparatus 100. If the right eye image is displayed on the display apparatus 100, the glasses 200 open the field of view for the right eye and close the field of view for the left eye.

For such correspondence of the 3D image displayed on the display apparatus 100 with the selective light transmission/shield of the shutter glasses 200, the display apparatus 100 generates a synchronization signal corresponding to a display timing of the image frames and transmits it to the shutter glasses 200 which then operates based on the received synchronization signal.

As the display apparatus 100 is connected to the shutter glasses 200 not unidirectionally but bidirectionally in communication route, data can be transmitted/received therebetween.

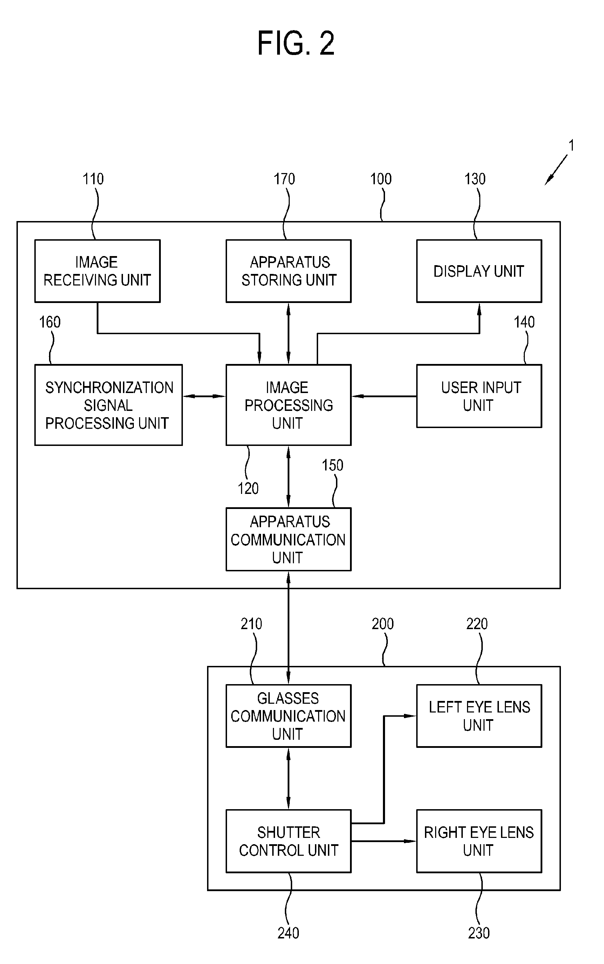

Hereinafter, configuration of the display apparatus 100 and the shutter glasses 200 will be described with reference to FIG. 2. FIG. 2 is a block diagram of the display apparatus 100 and the shutter glasses 200.

As shown in FIG. 2, the display apparatus 100 includes an image receiving unit 110 which receives an image signal, an image processing unit 120 which processes the image signal received in the image receiving unit 110, a display unit 130 which displays the image signal processed by the image processing unit 120 as an image, a user input unit 140 which is operated by a user, an apparatus communication unit 150 which communicates with the shutter glasses 200, and a synchronization signal processing unit 160 which generates a synchronization signal corresponding to a 3D image displayed on the display unit 130 and transmits it via the apparatus communication unit 150.

The shutter glasses 200 includes a glasses communication unit 210 which communicates with the apparatus communication unit 150, a left eye lens unit 220 which performs light transmission/shield for a left eye of the user, a right eye lens unit 230 which performs light transmission/shield for a right eye of the user, and a shutter control unit 240 which operates the left eye lens unit 220 and the right eye lens unit 230 according to the synchronization signal received in the glasses communication unit 210.

Hereinafter, the above components of the display apparatus 100 will be described.

The image receiving unit 110 receives the image signal and transmits it to the image processing unit 120. The image receiving unit may be implemented in various ways according to the standards of the received image signal and the form of implementation of the display apparatus 100. For example, the image receiving unit 110 may receive a radio frequency (RF) signal sent from a broadcasting station (not shown) in a wireless manner or receive an image signal via a cable, which is according to the standards of composite video, component video, super video, SCART, high definition multimedia interface (HDMI) or others known in the art. If the image signal is the broadcasting signal, the image receiving unit 110 includes a tuner which tunes the broadcasting signal for each channel.

The image processing unit 120 performs various image processing preset for the image signal. The image processing unit 120 outputs the processed image signal to the display unit 130, so that an image can be displayed on the display unit 130.

The image processing performed by the image processing unit 120 may include, but is not limited to, decoding, de-interlacing, frame refresh rate conversion, scaling, noise reduction for improved image quality and detail enhancement in association with various image formats. The image processing unit 120 may be implemented with individual configuration to allow independent performance of these processes or with integrated configuration of these processes.

The image processing unit 120 includes an apparatus storing unit 170 which stores various setting values or parameters referenced in performing the image processing. The apparatus storing unit 170 is connected to the image processing unit 120 so that stored data can be read/recorded/deleted/corrected by the image processing unit 120 and is implemented with a nonvolatile memory so that data can be conserved even when the display apparatus 100 is powered off.

If a 3D image signal is received in the image receiving unit 110, the image processing unit 120 extracts a left eye image and a right eye image from the 3D image signal and displays the extracted left eye image and right eye image alternately. The left eye image and the right eye image include the same objects and the image processing unit 120 displays the left eye image and the right eye image sequentially in such a manner that the objects of the left eye image and the right eye image are deviated from each other by a predetermined pixel value so that a user can perceive the objects in three dimensions. The predetermined pixel value is referred to as a disparity value between the left eye image and the right eye image.

Details of the image processing unit 120 and the disparity value will be described later.

The display unit 130 is implemented with a liquid crystal display, a plasma display panel or other various displays known in the art and displays the image signal processed by the image processing unit 120 as an image in a plane. The display unit 130 displays one image frame by vertically arranging a plurality of horizontal scan lines scanned by the image processing unit 120.

The user input unit 140 is manipulated by a user and transmits a command to designate a specific processing operation of the image processing unit 120 corresponding to the user's manipulation to the image processing unit 120. The user input unit 140 manipulated by the user includes menu keys or a control panel placed in the outside of the display apparatus 100, or a remote controller separated from the display apparatus 100.

The apparatus communication unit 150 transmits the synchronization signal from the synchronization signal processing unit 160 to the shutter glasses 200. The apparatus communication unit 150 is provided in compliance with bidirectional wireless communication standards such as radio frequency (RF), Zigbee, Bluetooth and the like and can transmit/receive signals/information/data having different characteristics between the display apparatus 100 and the shutter glasses 200.

The synchronization signal processing unit 160 generates the synchronization signal synchronized with the display timing of the 3D image displayed on the display unit 130 and transmits it to the apparatus communication unit 150 via which the synchronization signal is transmitted to the shutter glasses 200. That is, the synchronization signal from the synchronization signal processing unit 160 represents a timing during which the left eye image/right eye image are scanned to the display unit 130 and a timing during which the left eye image/right eye image are displayed on the display unit 130.

Hereinafter, the components of the shutter glasses 200 will be described.

The glasses communication unit 210 is provided in compliance with the communication standards of the apparatus communication unit 150 and performs bidirectional communication with the apparatus communication unit 150. As the 3D image is displayed on the display apparatus 100, the glasses communication unit 210 receives the synchronization signal from the display apparatus 100. The glasses communication unit 210 may transmit data stored in the shutter glasses 200 to the display apparatus 100 under control of the shutter control unit 240.

The left eye lens unit 220 and the right eye lens unit 230 perform selective light transmission/shield for both eyes of the user under control of the shutter control unit 240. In this manner, as the left eye lens unit 220 and the right eye lens unit 230 perform the selective light transmission for both eyes of the user, the user can perceive the left and right images displayed on the display unit 130 through the left and right eyes, respectively.

The left eye lens unit 220 and the right eye lens unit 230 may be implemented with, but not limited to, liquid crystal lens which shield light when a voltage is applied thereto by the shutter control unit 240 and transmits when no voltage is applied thereto. In addition, the left eye lens unit 220 and the right eye lens unit 230 may have different light transmittances depending on a level of applied voltage.

The shutter control unit 240 drives the left eye lens unit 220 and the right eye lens unit 230 by selectively applying a voltage to the left eye lens unit 220 and the right eye lens unit 230 based on the synchronization signal received in the glasses communication unit 210.

Under this structure, the display apparatus 100 displays the 3D image based on an image signal on the display unit 130, generates the synchronization signal corresponding to the displayed image and transmits the generated synchronization signal to the shutter glasses 200. The shutter glasses 200 selectively drive the left eye lens unit 220 and the right eye lens unit 230 based on the synchronization signal received from the display apparatus 100.

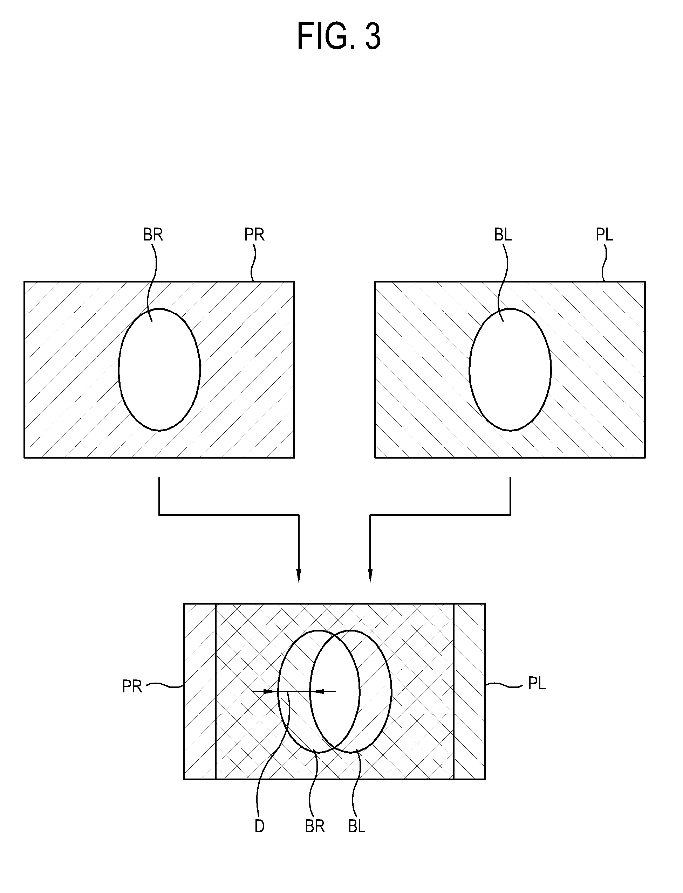

Hereinafter, a structure where the user perceives the 3D image will be described in more detail with reference to FIG. 3. FIG. 3 is a view showing an example of a disparity value D between the left eye image PL and the right eye image PR displayed on the display unit 130.

As shown in FIG. 3, two upper images are the left eye image PL and the right eye image PR, respectively. The left eye image PL and the right eye image PR contain the same objects BL and BR.

Here, the objects BL and BR mean at least one of the elements in the images, which is designated and perceived in three dimensions by the user. For example, in an image where an airplane flies in the sky, which is to be perceived in three dimensions by the user, the airplane may be assumed as the object BL or BR.

The image processing unit 120 displays the left eye image PL and the right eye image PR on the display unit 130 sequentially. The user perceives the left eye image PL and the right eye image PR overlapping with each other due to a visual afterimage effect, like an image shown in the lower portion of FIG. 3.

Here, the object BL of the left eye image PL and the object BR of the right eye image PR do not coincide with each other in terms of their pixel position on the display unit 130 but are horizontally deviated from each other by a predetermined pixel value. This pixel value is referred to as a disparity value D.

The 3D effect of the objects BL and BR perceived by the user who wears the shutter glasses 200 is varied depending on the quantitative characteristics of the disparity value D. That is, the sense of depth of the objects BL and BR in the 3D images PL and PR is changed in terms of short/long distance as the disparity value D is varied.

This disparity value D is stored in the apparatus storing unit 170. When the image processing unit 120 processes the left eye image PL and the right eye image PR to be displayed on the display unit 130, the image processing unit 120 adjusts a relative display position between the left eye image PL and the right eye image PR depending on the disparity value D stored in the apparatus storing unit 170.

However, a method of displaying the 3D images PL and PR based on the stored disparity value D is independent of the visibility of the user. That is, if a plurality of users perceive the 3D images PL and PR, visibilities of the users may be different. For example, some users may have normal vision, whereas some users may have farsightedness or nearsightedness.

Accordingly, when the plurality of users perceive a 3D image to which the same disparity value D is applied, the sense of depth of the objects BL and BR perceived by different users is varied. For example, if the stored disparity value D is set for a user who has normal vision, a user who has farsightedness or nearsightedness cannot normally perceive the 3D effect of the objects BL and BR to which the disparity value D is applied.

In addition, the visibility of user may be not only farsightedness/nearsightedness but also abnormal convergence of both eyes.

The shutter glasses 200 are generally fabricated on the basis of eyes of an ordinary user which has orthotropia in which both eyes of the user are directed to an object to be watched.

However, if a user does not have stereo vision, but has a squint where both eyes are not directed to the same object and one eye is deflected at all times, then convergence of both eyes becomes problematic, which may result in increased eyeball fatigue due to excessive use of extraocular muscle to making positions of both eyes coincident.

As different users may have different visibilities, if the 3D images PL and PR are displayed based on the fixed disparity value D, it may be difficult for some users to perceive the sense of 3D effect of the 3D images PL and PR normally or fatigue of both eyes may be weighted.

To overcome these problems, the display apparatus of this exemplary embodiment sets and stores disparity values between a left eye image and a right eye image in correspondence with at least one shutter glasses 200, and, if it is determined that the shutter glasses 200 communicate with the display apparatus 100 when the 3D image is displayed, displays the 3D image based on the disparity values stored in correspondence with the shutter glasses 200.

That is, the display apparatus 100 sets and stores disparity values for each of identifiable shutter glasses 200. Then, the display apparatus 100 identifies the shutter glasses 200 in communication with the shutter glasses 200, selects the disparity values set and stored in correspondence with the identified shutter glasses 200, and displays the 3D image based on the selected disparity values.

In this manner, according to this exemplary embodiment, by individually setting the disparity values depending on the shutter glasses 200 and storing them in correspondence with the shutter glasses 200, it is possible to display a 3D image to which disparity values corresponding to visibilities of users who wear the shutter glasses 200 are selectively applied. That is, the display apparatus 100 can display a 3D image in consideration of visibilities of individual users.

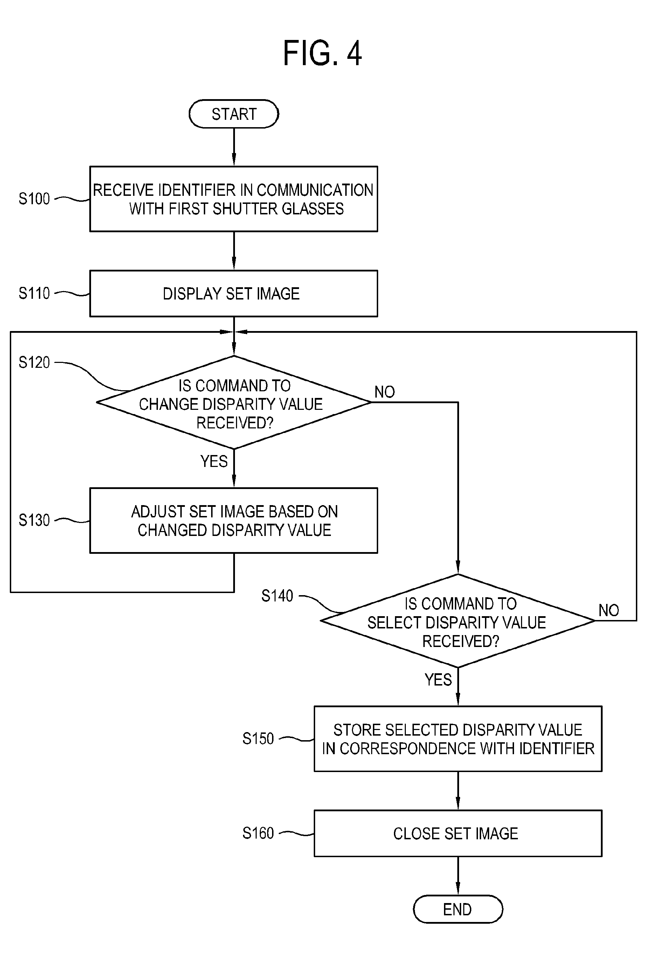

Hereinafter, a method in which the display apparatus 100 of this exemplary embodiment sets and stores a disparity value corresponding to the shutter glasses 200 will be described with reference to FIG. 4. FIG. 4 is a flow chart showing a process of setting and storing a disparity value in the display apparatus 100.

Referring to FIG. 4, the image processing unit 120 communicates with at least one shutter glasses 200, for example, a first shutter glasses 200, and receives an identifier (ID) of the first shutter glasses 200 (operation S100). Here, the identifier (ID) or identification information is a parameter contained in a message to be transmitted in a wireless manner from the first shutter glasses 200 to the display apparatus 100 and may be designated in various ways within a range in which the display apparatus 100 can identify the first shutter glasses 200 of a plurality of shutter glasses 200 which can communicate with the display apparatus 100. For example, the identifier may be implemented with ID information such as a unique serial number designated to the first shutter glasses 200 during fabrication or a MAC address of the glasses communication unit 210 of the first shutter glasses 200.

Upon receiving the ID of the first shutter glasses 200, the image processing unit 120 displays a set image on the display unit 130 (operation S110). The set image is an image having a disparity value which can be adjusted by the user through the user input unit 140 and is not limited in its implementation.

For example, the set image may be provided such that a disparity value for an object is adjusted by directly inputting the disparity value as a numerical value or through a directional key of the user input unit 140. In addition, as the disparity value is changed, the set image may include a 3D image reflecting the changed disparity value in real time.

When the set image is displayed, the user adjusts the disparity value through the user input unit 140. The adjusted disparity value D is delivered from the user input unit 140 to the image processing unit 120.

Upon receiving a command to change the disparity value (operation S120), the image processing unit 120 adjusts the set image based on the changed disparity value (operation S130). The adjusted set image represents a 3D image reflecting the changed disparity value and the user changes the disparity value while checking it until he/her obtains a desired sense of 3D effect.

Upon receiving a command to select and determine a disparity value (operation S140), the image processing unit 120 stores the selected disparity value in the apparatus storing unit 170 in association with the ID of the first shutter glasses 200 which was received in operation S100 (operation S150). Then, the image processing unit 120 closes the set image (operation S160).

Thus, the display apparatus 100 can set and store the disparity value corresponding to the first shutter glasses 200. If a plurality of shutter glasses is present, the display apparatus 100 stores disparity values corresponding to the plurality of shutter glasses 200 by performing the above-described process for the shutter glasses 200.

Although in this exemplary embodiment the display apparatus 100 stores the set disparity value in the internal apparatus storing unit 170, the spirit and scope of the exemplary embodiments is not limited thereto.

For example, the display apparatus 100 may be connected to and communicates with a server (not shown) via a network. The display apparatus 100 may transmit the ID of the first shutter glasses 200 and a set disparity value to the server (not shown) such that the set disparity value is stored in the server (not shown).

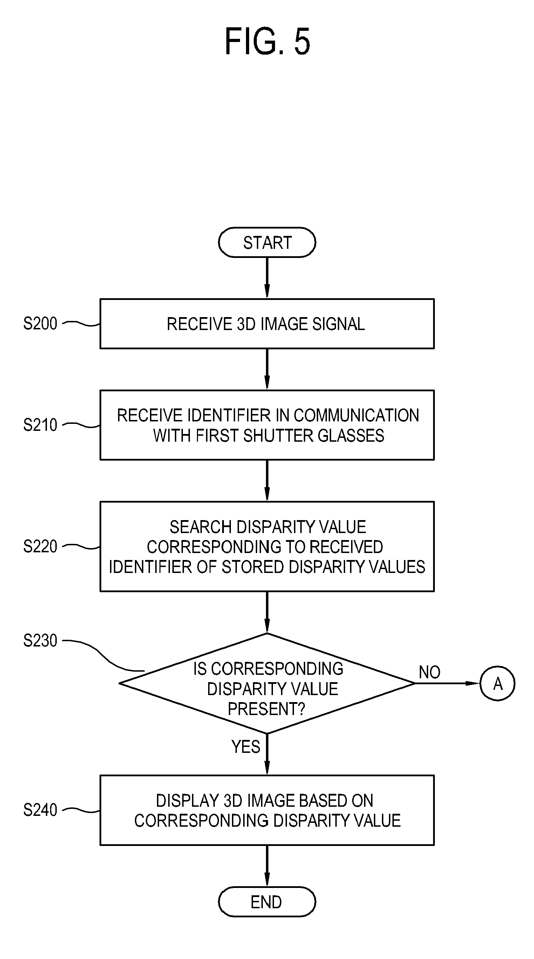

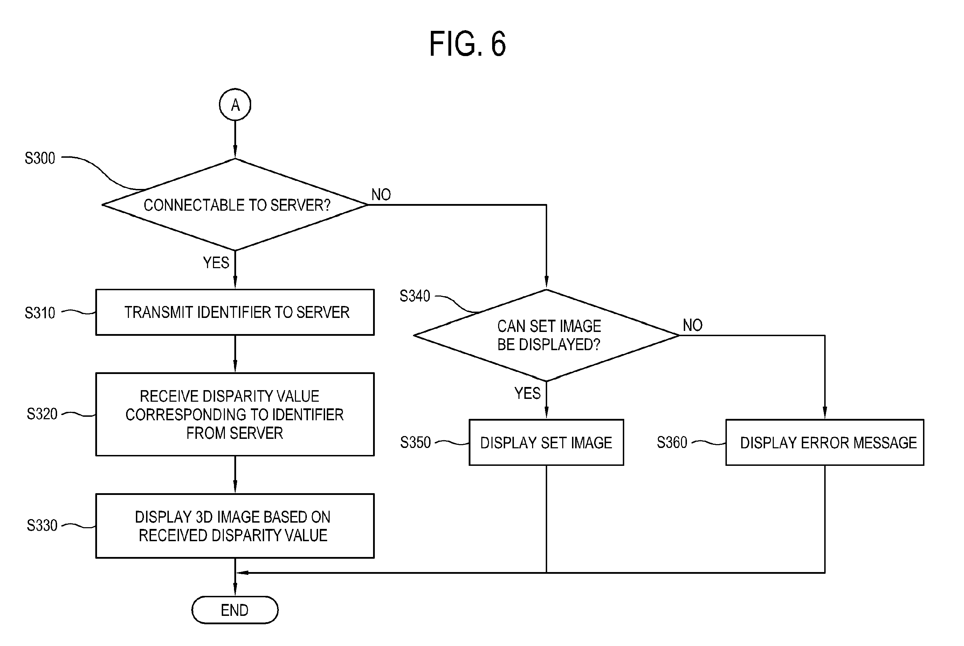

Hereinafter, a method of displaying a 3D image in the display apparatus 100 of this exemplary embodiment based on the disparity value corresponding to the first shutter glasses 200 will be described with reference to FIGS. 5 and 6. FIGS. 5 and 6 are flow charts showing such a displaying process.

As shown in FIG. 5, the image receiving unit 110 receives a 3D image signal (operation S200). The image processing unit 120 processes the received 3D image signal into an image to be displayed and receives the ID of the first shutter glasses 200 in communication with the first shutter glasses 200 (operation S210).

The image processing unit 120 searches a disparity value corresponding to the received ID of disparity values stored in the apparatus storing unit 170 according to the process of FIG. 4 (operation S220). As a result of the search, if the corresponding disparity value is present (operation S230), the image processing unit 120 displays the 3D image based on the corresponding disparity value (operation S240).

As shown in FIG. 6, if a disparity value corresponding to the ID of the first shutter glasses 200 is not present in operation S230 of FIG. 5, the image processing unit 120 determines whether or not it can be connected to a separate server (not shown) via a network (operation S300).

If the display apparatus 100 can be connected to the server (not shown), the image processing unit 120 transmits the ID of the first shutter glasses 200 to the server (not shown) (operation S31 0) and receives the disparity value corresponding to the transmitted ID from the server (not shown) (operation S320). Then, the image processing unit 120 displays the 3D image based on the disparity value received from the server (not shown) (operation S330).

On the other hand, if the image processing unit 120 cannot be connected to the server (not shown) in operation S300, it is determined whether or not a set image can be displayed (operation S340). This is because the set image may be set with restrictions on display based on user environments of the display apparatus 100.

If the set image can be displayed, the image processing unit 120 displays the set image so that the user can set the disparity value corresponding to the first shutter glasses 200 (operation S350). On the other hand, if the set image cannot be displayed, the image processing unit 120 displays an error message for the user (operation S360).

Thus, the display apparatus 100 can display the 3D image having the disparity value adjusted so that the user who wears the first shutter glasses 200 can perceive a proper sense of 3D effect.

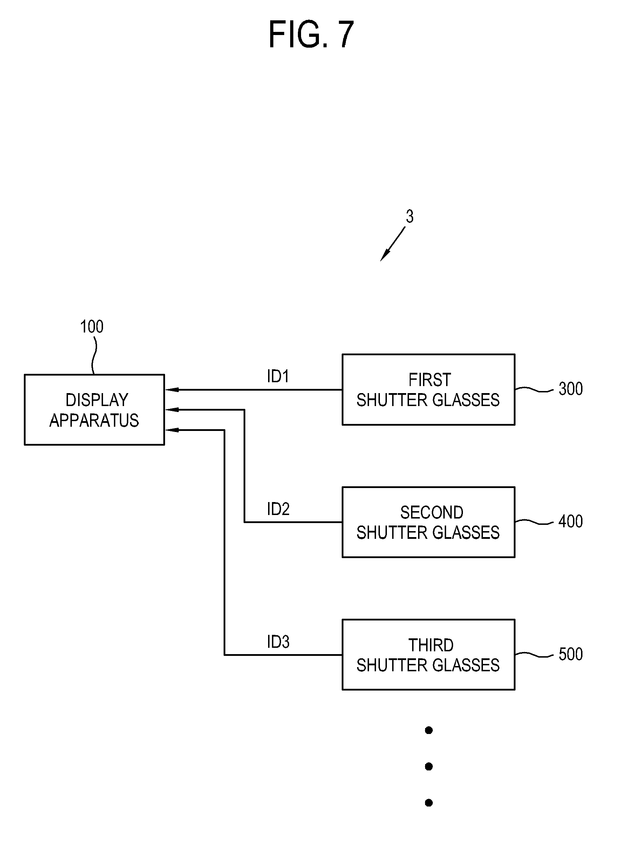

Although in the above exemplary embodiment the display apparatus 100 has one shutter glasses 200, the display apparatus 100 may have a plurality of shutter glasses 300, 400 and 500. Hereinafter, a second exemplary embodiment for this configuration will be described with reference to FIG. 7. FIG. 7 is a block diagram of a display system 3 according to a second exemplary embodiment.

As shown in FIG. 7, the display system 3 of this exemplary embodiment includes a display apparatus 100 and a plurality of shutter glasses 300, 400 and 500 communicating with the display apparatus 100.

The display apparatus 100 and each of the plurality of shutter glasses 300, 400 and 500 have the same configuration as the above first exemplary embodiment, and therefore, explanation of which will not be repeated. Although it is shown that the second exemplary embodiment has three shutter glasses 300, 400 and 500, the spirit and scope of the exemplary embodiments are not limited thereto.

In the operation of setting a disparity value, the display apparatus 100 receives identifiers ID1, ID2 and ID3 from first shutter glasses 300, second shutter glasses 400 and third shutter glasses 500, respectively, and sets and stores disparity values corresponding to the identifiers ID1, ID2 and ID3 of the respective shutter glasses 300, 400 and 500.

Such a process is individually performed for each of shutter glasses 300, 400 and 500 and details of which are as shown in FIG. 4.

When a 3D image is displayed, the display apparatus 100 receives the identifiers ID1, ID2 and ID3 from respective shutter glasses 300, 400 and 500. The display apparatus 100 searches ones of the stored disparity values, which correspond to the identifiers ID1, ID2 and ID3.

If the searched disparity values corresponding to the identifiers ID1, ID2 and ID3 are all equal, the display apparatus 100 displays a 3D image based on the searched disparity values.

On the other hand, if the searched disparity values corresponding to the identifiers ID1, ID2 and ID3 are different, the display apparatus 100 may derive new disparity values based on the searched disparity values according to the following method.

Assuming that the disparity values corresponding to the identifiers ID1, ID2 and ID3 are DP1, DP2 and DP3, respectively, the display apparatus 100 calculates the mean value of DP1, DP2 and DP3 and displays a 3D image based on the calculated mean value. The mean value may be selected from several mathematical concepts including the arithmetic mean, the geometric means and the harmonic mean and the display apparatus 100 may incorporate a mathematical equation or an algorithm to calculate this mean value.

Alternatively, the display apparatus 100 may select the median value from DP1, DP2 and DP3.

As another alternative, the display apparatus 100 may calculate a distribution deviation from DP1, DP2 and DP3. In this case, if the distribution deviation is greatly different from a preset range, this distribution deviation may be excluded or an error message may be displayed.

For example, DP1 and DP2 may show adjacent numerical values while DP3 may be different from DP1 and DP2 by a specific numerical value. In this case, the display apparatus 100 may calculate new disparity values based on DP1 and DP2 except DP3 or inform a user of an error message indicating that the distribution deviation of DP3 is greatly different from those of DP1 and DP2.

In this manner, the display apparatus 100 of this exemplary embodiment can display the 3D image having proper disparity values applied to the plurality of shutter glasses 300, 400 and 500.

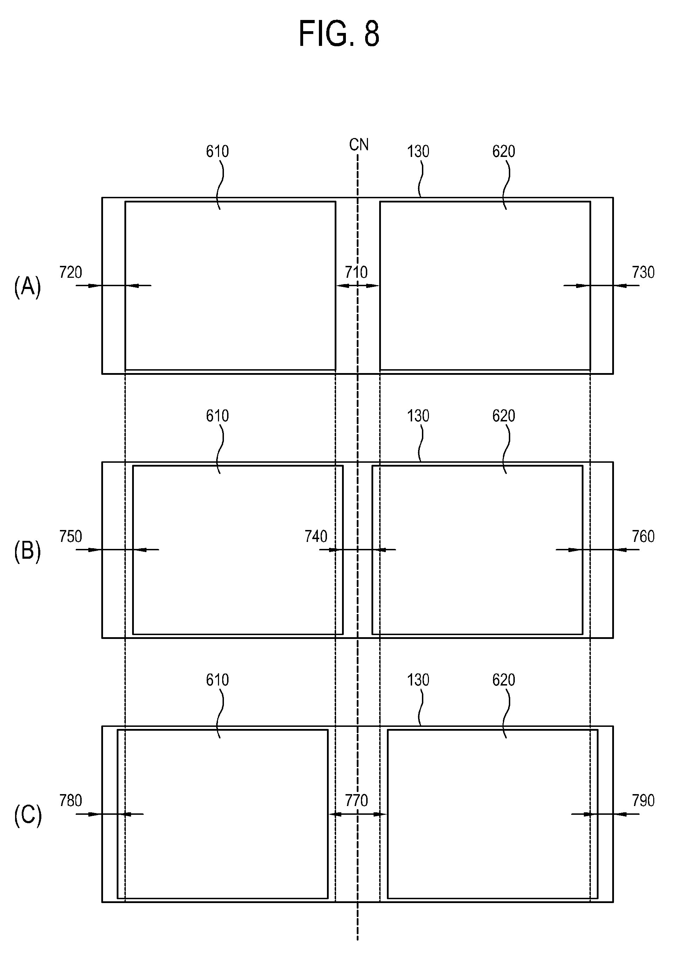

Hereinafter, an example in which a user sets disparity values through a set image depending on the visibility of the user will be described with reference to FIG. 8. FIG. 8 is a view showing an example of an image for which a disparity value is set in the display system 1 depending on the user's visibility.

A set image (A) shown in FIG. 8 shows a disparity value for a user who has normal visibility. The set image shown in FIG. 8 is only one example but is not intended to limit the spirit and scope of the exemplary embodiments. Therefore, it should be understood that the set image may be implemented in various ways different from the following description.

The display system 1 of FIG. 8 has the same configuration as that of FIG. 2, and an explanation thereof will not be repeated.

A left eye image 610 and a right eye image 620 are horizontally arranged with a virtual central line CN as the center in a screen of the display unit 130.

At this time, a degree of disparity in the inner direction of the screen, that is, a distance between the left eye image 610 and the right eye image 620 with the central line CN as the center, is referred to as a first disparity value 710. Degrees of disparity in the outer direction of the screen, that is, a distance between a left edge of the screen and a left edge of the left eye image 610 and a distance between a right edge of the screen and a right edge of the right eye image 620, are referred to as a second disparity value 720 and a third disparity value 730, respectively.

A user who has normal visibility and wears the 3D glasses 200 to watch the set image can perceive a 3D image according to such degrees of disparity.

(B) of FIG. 8 shows a set image reflecting disparity setting adjusted for a user who has nearsightedness. The user can adjust a degree of disparity to correspond to the nearsightedness from (A) of FIG. 8 through the user input unit 140.

For the user who has the nearsightedness, a first disparity value 740 is set to be smaller than the first disparity value 710 in (A) of FIG. 8 and a second disparity value 750 and a third disparity value 760 are set to be larger than the second and third disparity values 720 and 730 in (A) of FIG. 8, respectively. Thus, the sense of depth of the 3D image reflecting the corresponding disparity setting is formed at a relatively short distance as compared to the case where the user has the normal visibility, thereby allowing the nearsighted user to perceive the 3D image normally.

(C) of FIG. 8 shows a set image reflecting disparity setting adjusted for a user who has farsightedness.

For the user who is farsighted, a first disparity value 770 is set to be larger than the first disparity value 710 in (A) of FIG. 8 and a second disparity value 780 and a third disparity value 790 are set to be smaller than the second and third disparity values 720 and 730 in (A) of FIG. 8, respectively. Thus, the sense of depth of the 3D image reflecting the corresponding disparity setting is formed at a relatively long distance as compared to the case where the user has the normal visibility, thereby allowing the farsighted user to perceive the 3D image normally.

It has been illustrated in the above that the user has normal visibility. However, in an example where a user has different left and right eyesight or abnormal convergence of both eyes, degrees of disparity of the left eye image 610 and the right eye image 620 may be asymmetrically set.

It has been illustrated in the above exemplary embodiments that the display apparatus obtains the identification information from the 3D glasses. In this case, the display apparatus obtains the disparity setting mapped to the obtained identification information from information preset depending on stored disparity setting, that is, visibility corresponding to the identification information. Such disparity setting is differently set depending on at least one of farsightedness, nearsightedness, convergence of both eyes and a difference in eyesight between both eyes.

However, the spirit and scope of the exemplary embodiments are not limited thereto. Display apparatuses of other exemplary embodiments may obtain disparity settings mapped to identification information input by a user through a user input unit or a UI menu. In this case, the display apparatuses determine degrees of disparity based on the obtained disparity setting and reflect them in the display of a left eye image and a right eye image.

Although a few exemplary embodiments have been shown and described, it will be appreciated by those skilled in the art that changes may be made in these exemplary embodiments without departing from the principles of the exemplary embodiments, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed .

## Claims

1. A control method of a display apparatus, the control method comprising:
obtaining at least one piece of identification information of a user and identification information of three-dimensional (3D) glasses;
obtaining a disparity setting mapped to the at least one piece of identification information of the user and identification information of the 3D glasses; and
displaying a left eye image and a right eye image by determining a degree of disparity based on the disparity setting.

2. The control method according to claim 1, wherein the at least one piece of identification information of the user and identification information of the 3D glasses is at least one of user input information input to a user interface (UI) and information received from the 3D glasses.

3. The control method according to claim 1, wherein the 3D glasses comprise at least one of shutter glasses and polarizing glasses.

4. The control method according to claim 1, wherein the identification information of the 3D glasses is a parameter contained in a message transmitted in a wireless manner from the 3D glasses to the display apparatus.

5. The control method according to claim 1, wherein the disparity setting is information preset based on visibility corresponding to the at least one piece of identification information of the user and identification information of the 3D glasses.

6. The control method according to claim 1, wherein the at least one piece of identification information of the user and identification information of the 3D glasses comprises at least one of ID information of the 3D glasses and a Media Access Control (MAC) address.

7. The control method according to claim 1, wherein the disparity setting is set differently based on at least one of farsightedness, nearsightedness, convergence of both eyes and a difference in eyesight between both eyes of the user.

8. The control method according to claim 1, wherein the disparity setting is set such that a degree of disparity in an inner direction of a screen of the display apparatus for visibility of a farsighted user is larger than the degree of disparity of a user with normal vision or a nearsighted user.

9. The control method according to claim 1, wherein the disparity setting is set such that a degree of disparity in an outer direction of a screen of the display apparatus for visibility of a farsighted user is smaller than the degree of disparity of a user with normal vision or a nearsighted user.

10. The control method according to claim 1, wherein the disparity setting is set such that a degree of disparity in an inner direction of a screen of the display apparatus for visibility of a nearsighted user is smaller than the degree of disparity of a user with normal vision or a farsighted user.

11. The control method according to claim 1, wherein the disparity setting is set such that a degree of disparity in an outer direction of a screen of the display apparatus for visibility of a nearsighted user is larger than the degree of disparity of a user with normal vision or a farsighted user.

12. The control method according to claim 1, wherein the disparity setting is set such that degrees of disparity of the left eye image and the right eye image are asymmetrically set for visibility of a user having different left and right eyesight.

13. A display apparatus comprising:
a display unit; and
an image processing unit which obtains at least one piece of identification information of a user and identification information of three-dimensional (3D) glasses, determines a degree of disparity based on a disparity setting mapped to the obtained at least one piece of identification information of the user and the identification information of the 3D glasses, and displays a left eye image and a right eye image on the display unit based on the determined degree of disparity.
